# EUROPÄISCHE PATENTSCHRIFT

(11) **EP 4 172 675 B1**
(45) Veröffentlichungstag und Bekanntmachung des Hinweises auf die Patenterteilung: **30.09.2026**
(21) Anmeldenummer: 21758084.4
(22) Anmeldetag: 04.08.2021
(51) Int. Cl.: G02B 21/30, G02B 21/00, G02B 21/08

(54) **INVERSES MIKROSKOP**
INVERTED MICROSCOPE
MICROSCOPE INVERSÉ

(30) Priorität: 06.08.2020 DE 102020120790
(43) Veröffentlichungstag der Anmeldung: 03.05.2023
(60) Teilanmeldung: 25211253.7 / 4 664 181
(73) Patentinhaber: Leica Microsystems CMS GmbH, 35578 Wetzlar (DE)
(72) Erfinder: CHRIST, Stefan, 35641 Schöffengrund (DE)
(74) Vertreter: Schaumburg und Partner Patentanwälte mbB
(86) Internationale Anmeldenummer: PCT/EP2021/071802
(87) Internationale Veröffentlichungsnummer: WO 2022/029194

(56) Entgegenhaltungen:
- JP-A- 2010 091 738
- US-A1- 2008 247 038

## Beschreibung

Das vorliegende erfinderische Konzept betrifft ein inverses Mikroskop mit Durchlicht-Beleuchtung mit einem Mikroskoptisch mit einer für die Durchlicht-Beleuchtung vorbereiteten Öffnung, der ausgebildet ist, einen Probenhalter insbesondere für biologische Proben wie lebende Zellen, aufzunehmen, und mit einer unterhalb des Mikroskoptisches angeordneten Abbildungsoptik.

### Hintergrund

Inverse Mikroskope dienen häufig zur Bildgebung lebender Zellen, die in einem Probenhalter, wie einer Petrischale oder einer Multiwell-Platte untergebracht sind. Der Probenhalter wird in eine Tischöffnung des Mikroskoptisches eingesetzt. Dazu kann der Tisch eine Probenaufnahme aufweisen, welche den Probenhalter aufnimmt und den Probenhalter beim Verfahren des Mikroskoptisches sicher in seiner Position hält. Der Durchlicht-Beleuchtungsstrahlengang wird ebenfalls durch diese Tischöffnung und somit durch die Probe geführt. Unterhalb des Mikroskoptisches ist eine Abbildungsoptik angeordnet, die typischerweise zumindest aus dem Mikroskopobjektiv oder einem Objektivwechsler mit verschiedenen Objektiven, von denen eines in den Beobachtungsstrahlengang gebracht werden kann, umfasst. Die Abbildungsoptik kann im Rahmen dieser Anmeldung auch weitere Elemente, wie Tubuslinsen, Filter etc. und auch einen Detektor für die Bildgebung, wie beispielsweise eine Kamera, umfassen.

Um Stressreaktionen, Schädigungen oder gar ein Absterben der lebenden Zellen zu vermeiden, ist der Eintrag von Strahlung und Wärme in die Probe auf ein Mindestmaß zu begrenzen. Es sind daher Inkubationslösungen bekannt, bei denen beispielsweise ein großer externer Aufbau, der einen großen Teil des Mikroskops umschließt, als ein inkubierter Raum gestaltet wird (im Handel als sogenannter "cage incubator" bezeichnet). Oder es wird nur ein kleines Volumen oberhalb der Probe bzw. oberhalb des Probenhalters inkubiert (im Handel als sogenannter "stage top incubator" bezeichnet). Bei der erstgenannten Cage Incubator-Lösung wird oberhalb des Mikroskoptisches ein großer, den Mikroskoptisch umgebender Raum des Mikroskops von der Umgebung abgeschnitten und in Form einer Kammer durch Zu- und Ableitungen inkubiert, wobei die Temperatur, die Atmosphärenzusammensetzung und insbesondere die Luftfeuchtigkeit geregelt werden. Bei der Stage Top Incubator-Lösung wird hingegen nur ein sehr kleines Volumen oberhalb des Probenhalters hinsichtlich Temperatur, Zusammensetzung der Luft und Luftfeuchtigkeit kontrolliert. Bei der erstgenannten Lösung muss ein verhältnismäßig voluminöser, große Teile des Mikroskops von oben umschließender Raum inkubiert werden, wodurch große Durchflussmengen an Luft, Gasen usw. erforderlich sind, die wiederum Energie verbrauchen und Zeit erfordern, bis ein thermisches Gleichgewicht erzielt ist. Demgegenüber konzentriert sich die zweitgenannte Lösung mit dem "Stage Top Incubator" auf ein kleines Volumen und somit unmittelbar auf die Umgebung oberhalb der Probe bzw. des Probenhalters selbst, vernachlässigt dabei jedoch die Grenzflächen des Probenhalters zu den Räumen oberhalb und unterhalb des Mikroskoptisches. Der "Stage Top Incubator" hat keine eigene Heizung und muss je nach Zelltyp zusätzlich extern temperiert werden (z.B. Heißluft oder Wasserkühler/-heizer) und erfordert somit, dass von außen Wärme eingeleitet oder Wärme abgeleitet wird.

Bei der Cage Incubator-Lösung wirkt der Mikroskoptisch häufig als Barriere, so dass der Bereich unterhalb des Mikroskoptisches deutlich weniger von Inkubationsatmosphäre durchflossen wird als der Bereich oberhalb des Mikroskoptisches; zudem sind die Außenflächen des Cage Incubators in der Regel nicht isoliert, so dass auch hier Wärme eingeleitet bzw. ausgeleitet werden kann. Zu einem unkontrollierten Wärmeeintrag kommt es aufgrund der Umgebungstemperatur insbesondere auch aufgrund elektronischer Komponenten, die im Mikroskop oder in der Umgebung des Mikroskops betrieben werden.

Zur Untersuchung lebender Zellen sind die Mikroskopobjektive häufig als Immersionsobjektive ausgestaltet, die sich in unmittelbarer Nähe zu dem Probenhalter bzw. zur untersuchten Probe befinden. Um hier eine Wärmeausleitung aus der Probe in das Objektiv zu vermeiden, ist es bekannt, das Objektiv mit einem Silikonkissen zu umgeben, in das Heizdrähte eingelassen sind, um die Temperatur des Objektivs steuern zu können. Diese Lösung ist aufwendig und verschwendet kostbaren Platz in dem ohnehin begrenzten Raum unterhalb des Mikroskoptisches und stellt eine Herausforderung in Bezug auf die Kabelführung im Bereich des Objektivrevolvers dar. Zudem sind die genannten Silikonkissen mit vielen Objektiven nicht kompatibel, wie etwa den sogenannten MotCorr-Objektiven, die über motorisch bewegliche Linsenglieder verfügen, um unterschiedliche Deckglasdicken und/oder unterschiedliche Brechungsindizes der Nährlösung auszugleichen.

Aus der JP 2010-091738 A ist ein Mikroskop bekannt, bei dem eine Öffnung unterhalb eines Probenträgers in einem Mikroskoptisch vorgesehen ist. Dort befindet sich ein Objektiv, das in einem Inkubationsraum eingeschlossen ist. An dem Objektiv bzw. dessen Wechseleinrichtung ist ein Temperatursensor angeordnet, der sich mit dem Objektiv mitbewegt. Mittels dieses Temperatursensors kann ein Messignal an den Controller gegeben werden, mit dem wiederum die Temperatur im Inkubationsraum geregelt werden kann. Aus der US 2008/247038 A1 ist ein vergleichbares Mikroskop bekannt.

Es besteht somit ein Bedarf nach einer verbesserten Temperaturregelung für eine optimierte Probenversorgung bei inversen Mikroskopen der oben genannten Art, insbesondere um Stressreaktionen, Schädigungen oder gar Absterben der untersuchten Zellen aufgrund Wärmeeintrag oder Wärmeableitung zu vermeiden.

### Zusammenfassung des erfinderischen Konzepts

Das erfindungsgemäße Konzept betrifft ein inverses Mikroskop gemäß Anspruch 1.

Das erfindungsgemäße Konzept sieht somit einen geschlossenen unteren Inkubationsraum vor, der an die Unterseite des Mikroskoptisches grenzt, wobei der Mikroskoptisch selbst und der dort angeordnete Probenhalter zumindest einen Teil der Begrenzungsfläche des unteren Inkubationsraums bilden.

Erfindgungsgemäß ist der Inkubationsraum im Übrigen isoliert, um möglichst wenig Wärme ein- oder auszuleiten. Der untere Inkubationsraum umschließt die Abbildungsoptik, die - wie bereits erläutert - zumindest das Mikroskopobjektiv oder eine Wechseleinrichtung mit mehreren Objektiven umfasst.

Die Temperatur im unteren Inkubationsraum ist auf eine vorgebbare Ziel-Temperatur einstellbar. Hierdurch kann erreicht werden, dass der in Gebrauch des inversen Mikroskops angrenzende Probenhalter von unten in seiner Temperatur beeinflussbar ist. Da der Probenhalter selbst ein Teil der oberen Grenzfläche des unteren Inkubationsraumes bildet, kann durch unmittelbaren Wärmetausch die gewünschte Temperatur der Probe - Zellen halten sich zumeist am Boden des Probenhalters auf - eingestellt werden. In Zusammenhang mit dem unteren Inkubationsraum meint "Inkubation" lediglich, dass eine vorgegebene Ziel-Temperatur im Inneren dieses Raumes einstellbar sein muss. Weitere Anforderungen müssen nicht gestellt werden, insbesondere ist eine Einstellung der Atmosphärenzusammensetzung oder der Luftfeuchtigkeit im unteren Raum nicht erforderlich. Das erfindungsgemäße Konzept erlaubt somit eine Temperaturregelung insbesondere im Bereich unterhalb des eingesetzten Probenhalters und der dort vorhandenen Abbildungsoptik, so dass die eingangs erwähnten Heizmanschetten für Objektive überflüssig werden. Zur Temperatureinstellung ist in dem Inkubationsraum mindestens ein Temperatur-Sensor vorgesehen, dessen Mess-Signal zur Einstellung der genannten Ziel-Temperatur dient. Das Vorsehen eines Temperatur-Sensors im Inkubationsraum erlaubt eine präzise Messung der dort herrschenden Temperatur und somit eine möglichst genaue Temperatursteuerung bzw. - regelung.

Das Mikroskop umfasst eine Heiz- und/oder Kühleinheit, welche die Temperatur im unteren Inkubationsraum einstellt. Eine solche Heiz- und/oder Kühleinheit kann beispielsweise ein Peltier-Element umfassen, mittels welchem geheizt oder gekühlt werden kann. Auch Heizdrähte oder Heizwendel können eingesetzt werden. Auch eine Wärmetauscheranordnung mit einem Heiz- und/oder Kühlmedium ist denkbar.

Die Heiz- und/oder Kühleinheit kann hierbei eine externe, also außerhalb des unteren Inkubationsraums angeordnete Heiz- und/oder Kühleinheit sein, die mit dem unteren Inkubationsraum über mindestens eine Verbindungsleitung verbunden ist, wobei durch Zufuhr und/oder Abfuhr geheizter und/oder gekühlter Luft die vorgegebene Ziel-Temperatur in dem Inkubationsraum einstellbar ist. Hierzu ist zweckmäßig, einen Ventilator vorzusehen, der Luft aus der externen Heiz- und/oder Kühleinheit in den unteren Inkubationsraum leitet. Beim Vorsehen zweier Verbindungsleitungen kann auf diese Weise auch eine Luftzirkulation erzeugt werden, die aus der Heiz- und/oder Kühleinheit in den Inkubationsraum und wieder zurückführt.

In einer anderen Ausgestaltung ist die Heiz- und/oder Kühleinheit als integrierte Heiz- und/oder Kühleinheit ausgebildet, d.h. innerhalb des unteren Inkubationsraums angeordnet, wobei durch Heizen oder Kühlen die vorgegebene Ziel-Temperatur eingestellt werden kann. Bei dieser Ausführungsform ist der Anschluss einer externen Heiz- und/oder Kühleinheit nicht notwendig, stattdessen kann ein einfaches Heiz- und/oder Kühlelement, wie ein Peltier-Element, die Funktion übernehmen, die vorgegebene Ziel-Temperatur im unteren Inkubationsraum einzustellen. Auch hierfür kann es zweckmäßig sein, beispielsweise mittels eines Ventilators für eine Luftströmung zu sorgen. Hierdurch kann für besonders homogene Temperaturverhältnisse gesorgt werden.

Es ist weiterhin zweckmäßig, wenn das inverse Mikroskop eine Steuerungseinheit umfasst, welche mit dem Temperatur-Sensor im Inneren des unteren Inkubationsraums in Kommunikationsverbindung steht, um das von dem Temperatur-Sensor erzeugte Mess-Signal an die Steuerungseinheit zu übertragen, welche ihrerseits die Heiz- und/oder Kühleinheit ansteuert, um die vorgegebene Ziel-Temperatur in dem unteren Inkubationsraum einzustellen. Die Steuerungseinheit kann hierbei als eigene selbständige Einheit ausgeführt sein, kann aber auch in der Heiz- und/oder Kühleinheit enthalten bzw. integriert mit dieser ausgebildet sein.

Der mindestens eine Temperatur-Sensor ist derart ausgebildet und angeordnet, dass dieser die Temperatur an der Unterseite oder in einem Bereich der Unterseite des auf dem bzw. im Mikroskoptisch aufzunehmenden Probenhalters misst. Dies umfasst den Bereich unterhalb des Probenhalters selbst und unterhalb einer oben genannten Probenaufnahme, welche den Probenhalter aufnimmt, sowie den Randbereich der Unterseite der Tischöffnung. Auf diese Weise kann möglichst genau eine Temperatur gemessen werden, die auch der Temperatur des Probenhalters und somit der Probe entspricht. Beispielsweise kann die Unterseite des Mikroskoptisches nahe der Öffnung zur Aufnahme des Probenhalters eine Befestigung wie eine Kabelschelle aufweisen, an der der Fühler des Temperatur-Sensors befestigt werden kann. Alternativ oder zusätzlich ist es auch möglich, den Temperatur-Sensor an einer anderen Stelle innerhalb des unteren Inkubationsraums anzuordnen, wobei der Temperaturfühler in Richtung Unterseite des Mikrokoptisches ausgerichtet ist, um zielgerichtet und berührungslos die Temperatur in einem Bereich der Unterseite des Probenhalters zu messen. Prinzipiell ist auch der Einsatz mehrerer Temperatur-Sensoren denkbar, wobei beispielsweise ein erster Sensor die Temperatur misst und dessen Temperaturwerte durch einen zweiten Sensor verifiziert werden oder aber Mittelwerte der Temperatur-Mess-Signale der verschiedenen Sensoren gebildet werden oder schließlich ein zweiter Sensor zum Einsatz kommt, wenn ein erster Sensor ausfällt.

Wie bereits angedeutet, kann ein Temperatur-Sensor an der Unterseite des Mikroskoptisches und in einem Abstand von dem aufzunehmenden Probenhalter angeordnet sein. Es ist aber auch möglich, dass mindestens ein Temperatur-Sensor an der Abbildungsoptik und/oder an einer Wechseleinrichtung für die Abbildungsoptik angeordnet ist. Es ist bei dieser Ausgestaltung vorgesehen, dass ein Temperatur-Sensor unmittelbar am Objektiv befestigt ist. Immersionsobjektive haben häufig eine Kappe, um Immersionsflüssigkeit zur Objektivspitze zu transportieren, so dass ein Thermoelement durch eine derartige Kappe geführt werden kann, so dass die Spitze des Thermoelements, also der Temperaturfühler, beim Betrieb des Mikroskops direkt zwischen Objektiv und Probenhalter in der Immersionslösung angeordnet ist. Selbstverständlich kann ein Temperatur-Sensor auch auf andere Art und Weise direkt am Objektiv oder an einem Objektivrevolver derart befestigt werden, dass der Temperaturfühler beim Betrieb des Mikroskops nahe des Probenhalters angeordnet ist. Hierzu sei auf die Ausführungsbeispiele weiter unten verwiesen.

Bei einer besonders vorteilhaften Ausgestaltung des erfinderischen Konzepts ist neben dem unteren Inkubationsraum ein weiterer Inkubationsraum oberhalb des Mikroskoptisches vorgesehen, der separat vom unteren Inkubationsraum ist. Es sind somit zwei Inkubationsräume vorgesehen, die vorzugsweise unabhängig voneinander inkubierbar sind. Mit dem Begriff "inkubierbar" ist gemeint, dass zumindest eine Ziel- bzw. Soll-Temperatur einstellbar ist. Zusätzlich können weitere Parameter eingestellt werden, wie beispielsweise die Atmosphärenzusammensetzung oder die Luftfeuchtigkeit. Insbesondere kann der obere Inkubationsraum, der die Oberseite des Mikroskoptisches und einen darin eingesetzten Probenhalter umfasst, eine Atmosphäre aufweisen, die hinsichtlich Temperatur, Zusammensetzung und Luftfeuchtigkeit gesteuert oder hinsichtlich einzuhaltender Sollwerte geregelt wird (siehe im Folgenden). Der obere Inkubationsraum kann bei einem inversen Mikroskop zusätzlich auch eine Beleuchtungsoptik umfassen. Die Temperaturen im unteren sowie im oberen Inkubationsraum sind vorzugsweise gleich.

Geeignete Inkubationsatmosphären des oberen Inkubationsraumes enthalten Luft mit einem vorgegebenen Gehalt an CO₂ (Kohlendioxid). Es kann auch wünschenswert sein, Hypoxie-Experimente mit Sauerstoffmangel in der Atmosphäre auszuführen. Die Temperatur der Inkubationsatmosphäre kann typischerweise in einem Bereich von Umgebungstemperatur bis 50°C, der CO₂-Bereich zwischen 0.5 bis 20% und der O₂-Bereich zwischen 1 bis 18% eingestellt werden. Die Luftfeuchtigkeit muss derart eingestellt werden, dass eine potentielle Kondensation vermieden wird oder sich zumindest nicht negativ auf die Mikroskopkomponenten oder die Probe auswirkt. Es ist bevorzugt, zumindest die Temperatur, die Luftfeuchtigkeit und den CO₂-Gehalt zu regeln. In Hypoxie-Experimenten wird der O₂-Gehalt über eine N₂-Zufuhr geregelt. Neben den genannten Temperatur-Sensoren können zu den genannten Zwecken weitere Sensoren vorhanden sein, um die Zusammensetzung der Atmosphäre regeln zu können.

Der obere und der untere Inkubationsraum sind durch die Objektebene getrennt, die durch den Mikroskoptisch, durch eine in der Öffnung des Mikroskoptisches aufgenommene Probenhalteraufnahme und durch den darin aufgenommenen Probenhalter gebildet wird. Die einzelnen Komponenten sollten möglichst bündig ohne Zwischenräume aneinander angrenzen. Der obere Inkubationsraum kann als Cage Incubator realisiert sein oder als inkubierter abgeschlossener Mikroskopgehäuseteil, der beispielsweise zumindest einen Teil der Durchlicht-Beleuchtungseinrichtung und die Oberseite von Mikroskoptisch und Probenhalter umfasst, wobei durch eine verschließbare Öffnung dieses Mikroskopgehäuseteils die Probe bzw. der Probenhalter zur Untersuchung in dem Probenraum eingebracht werden kann. Es sei darauf hingewiesen, dass in dem oberen Inkubationsraum auch eine Stage Top Incubator-Lösung realisiert sein kann, bei der lediglich der Stage Top Incubator inkubiert wird, wobei in diesem Fall aber auch zusätzlich die Temperatur im oberen Inkubationsraum auf einer gewünschten Ziel-Temperatur gehalten werden kann.

In einer vorteilhaften Ausgestaltung sind der obere und der untere Inkubationsraum jeweils über separate Verbindungsleitungen mit einer beide versorgenden externen Heiz- und/oder Kühleinheit verbunden, die weiter vorzugsweise die Temperaturen im oberen und unteren Inkubationsraum auf eine gleiche Ziel-Temperatur einstellt. Bei Bedarf kann die Zusammensetzung der Atmosphäre des oberen Inkubationsraums zusätzlich geregelt werden. Eine besonders komfortable Lösung erhält man, wenn die beiden Inkubationsräume separat mit jeweils mindestens einer ihnen getrennt zugeordneten externen Heiz- und/oder Kühleinheit verbunden sind. Durch Zufuhr und/oder Abfuhr geheizter und/oder gekühlter Luft ist eine vorgegebene Temperatur in dem oberen Inkubationsraum und die bereits oben diskutierte vorgegebene Ziel-Temperatur in dem unteren Inkubationsraum einstellbar.

Ein inverses Mikroskop, bei dem der obere Inkubationsraum und der untere Inkubationsraum von einem gemeinsamen Gehäuse umschlossen sind oder an einem gemeinsamen Gehäuse grenzen, hat sich als besonders vorteilhaft erwiesen. Hierbei kann das gemeinsame Gehäuse Seitenwände jeweils des oberen und des unteren Inkubationsraums umschließen oder aber selbst bilden. Hierdurch ist ein möglichst kompakter Aufbau des inversen Mikroskops möglich, bei dem die wesentlichen Mikroskopkomponenten im oberen und unteren Inkubationsraum untergebracht sind, wobei der obere und der untere Inkubationsraum jeweils getrennte Mikroskopgehäuseteile bilden. Bei dieser Ausführungsform ist es zweckmäßig, wenn das Gehäuse eine Tür oder Klappe aufweist, die den direkten Zugang zu dem oberen Inkubationsraum, also dem Objektraum, erlaubt.

Weitere Vorteile und Ausgestaltungen der Erfindung ergeben sich aus der Beschreibung und der beiliegenden Zeichnung.

Die Erfindung ist anhand eines Ausführungsbeispieles in der Zeichnung schematisch dargestellt und wird im Folgenden unter Bezugnahme auf die Zeichnung beschrieben.

### Kurze Figurenbeschreibung

Figur 1 zeigt ein erstes Ausführungsbeispiel eines inversen Mikroskops gemäß erfinderischem Konzept,
Figur 2 zeigt ein zweites Ausführungsbeispiel eines inversen Mikroskops gemäß erfinderischem Konzept,
Figur 3 zeigt ein drittes Ausführungsbeispiel eines inversen Mikroskops gemäß erfinderischem Konzept,
Figur 4 zeigt ein viertes Ausführungsbeispiel eines inversen Mikroskops gemäß erfinderischem Konzept,
Figur 5 zeigt ein fünftes Ausführungsbeispiel eines inversen Mikroskops gemäß erfinderischem Konzept,
Figur 6 zeigt ein sechstes Ausführungsbeispiel eines inversen Mikroskops gemäß erfinderischem Konzept,
Figur 7 zeigt eine erste Ausführungsform der Inkubation des unteren Inkubationsraums eines inversen Mikroskops gemäß erfinderischem Konzept,
Figur 8 zeigt eine zweite Ausführungsform der Inkubation des unteren Inkubationsraums eines inversen Mikroskops gemäß erfinderischem Konzept,
Figur 9 zeigt eine dritte Ausführungsform der Inkubation des unteren Inkubationsraums eines inversen Mikroskops gemäß erfinderischem Konzept,
Figur 10 zeigt eine vierte Ausführungsform der Inkubation des unteren Inkubationsraums eines inversen Mikroskops gemäß erfinderischem Konzept und
Figur 11 zeigt eine fünfte Ausführungsform der Inkubation des unteren Inkubationsraums eines inversen Mikroskops gemäß erfinderischem Konzept.

### Ausführliche Figurenbeschreibung

Die Figuren werden im Folgenden übergreifend behandelt. Gleiche Bezugszeichen bezeichnen baugleiche oder zumindest funktionsgleiche Elemente.

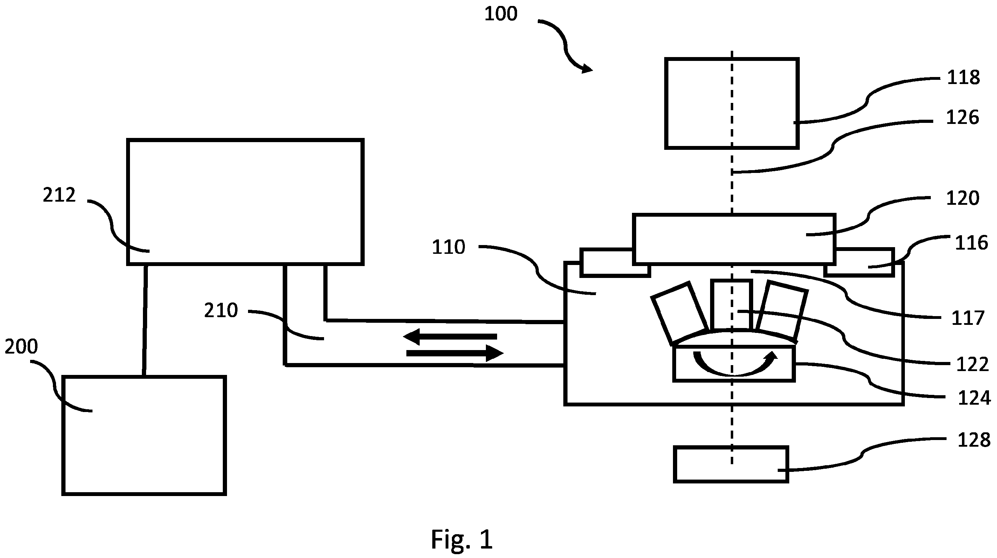

Figur 1 zeigt eine Ausführungsform eines inversen Mikroskops 100, das als wesentliche Elemente eine Beleuchtungsoptik 118, einen Mikroskoptisch 116, eine Objektiv-Wechseleinrichtung 124 mit mehreren Objektiven, wobei die Abbildungsoptik 122 eines der Objektive darstellt, das in die optische Achse 126 geschwenkt ist, sowie schließlich eine Detektionseinrichtung 128 beispielsweise in Form einer Kamera. Diese wesentlichen Elemente eines inversen Mikroskops sind an sich dem Fachmann bekannt und sollen daher vorliegend nicht weiter erläutert werden. Der Mikroskoptisch 116 weist eine Öffnung 117 auf, die in einer Weise ausgestaltet ist, um einen Probenhalter 120 aufzunehmen. Hierzu kann der Mikroskoptisch 116 eine Aufnahme aufweisen, in welche der Probenhalter 120 eingesetzt wird. Bei diesem Probenhalter 120 kann es sich um eine Multiwell-Platte oder eine Petrischale handeln, in der beispielsweise lebende Zellen aufgenommen sind. Im Betrieb des inversen Mikroskops 100 passiert ein Durchlicht-Beleuchtungsstrahlengang, der von der Beleuchtungsoptik 118 erzeugt wird, den Probenhalter 120 durch die Öffnung 117 im Mikroskoptisch 116, so dass die in dem Probenhalter 120 befindliche Probe beleuchtet wird. Der von der Probe ausgehende Beobachtungsstrahlengang gelangt durch die Abbildungsoptik 122 zu der Detektionseinrichtung 128, die ein mikroskopisches Bild der Probe liefert. Auf die Darstellung weiterer im Abbildungsstrahlengang vorhandener Elemente, wie Tubuslinsen, Filter etc., ist hier bewusst aus Gründen der Klarheit abgesehen worden.

Wie aus Figur 1 ersichtlich, wird ein unterer Inkubationsraum 110 durch einen Gehäuseabschnitt gebildet, der die Abbildungsoptik 122, in diesem Ausführungsbeispiel die gesamte Objektiv-Wechseleinrichtung 124 umfasst. Nach oben hin wird der untere Inkubationsraum 110 begrenzt durch den Mikroskoptisch 116 sowie den darin aufgenommenen Probenhalter 120. Da erfindungsgemäß in dem unteren Inkubationsraum 110 eine vorgegebene Ziel-Temperatur eingestellt werden soll, sind die genannten Gehäuseabschnitte, die den unteren Inkubationsraum 110 bilden, thermisch isoliert ausgeführt.

Ein Wärmeaustausch beschränkt sich dann, wie gewünscht, in erster Linie auf den in den Mikroskoptisch 116 eingesetzten Probenhalter 120. Somit kann direkt auf die Temperatur der Probe Einfluss genommen werden. Dies gilt umso mehr für adhärente Zellen, die sich am Boden des Probenhalters befinden.

Das inverse Mikroskop 100 gemäß Figur 1 umfasst weiterhin eine externe Heiz- und/oder Kühleinheit 212, die mit dem unteren Inkubationsraum 110 über eine Verbindungsleitung 210 verbunden ist, die zur Zufuhr und/oder Abfuhr geheizter und/oder gekühlter Luft dient. Hierdurch kann eine vorgegebene Ziel-Temperatur in dem unteren Inkubationsraum 110 eingestellt werden. Weiterhin umfasst das inverse Mikroskop 100 gemäß Figur 1 eine Steuerungseinheit 200, die die Heiz- und/oder Kühleinheit 212 entsprechend ansteuert, um die vorgegebene Ziel-Temperatur einstellen zu können. Hierzu ist ein Temperatur-Sensor vorgesehen, dessen Anordnung und Funktion in Zusammenhang mit den nun folgenden Figuren näher erläutert wird.

Es sei an dieser Stelle betont, dass die in Zusammenhang mit den vorliegenden Figuren erläuterten Elemente des inversen Mikroskops nicht nur in der jeweils dargestellten Kombination einem Fachmann offenbart sein sollen, sondern auch in anderen Kombinationen, die sich einem Fachmann leicht aus Übertragung von einer Figur in eine andere ergeben, ohne dass dies immer explizit ausgeführt sein muss.

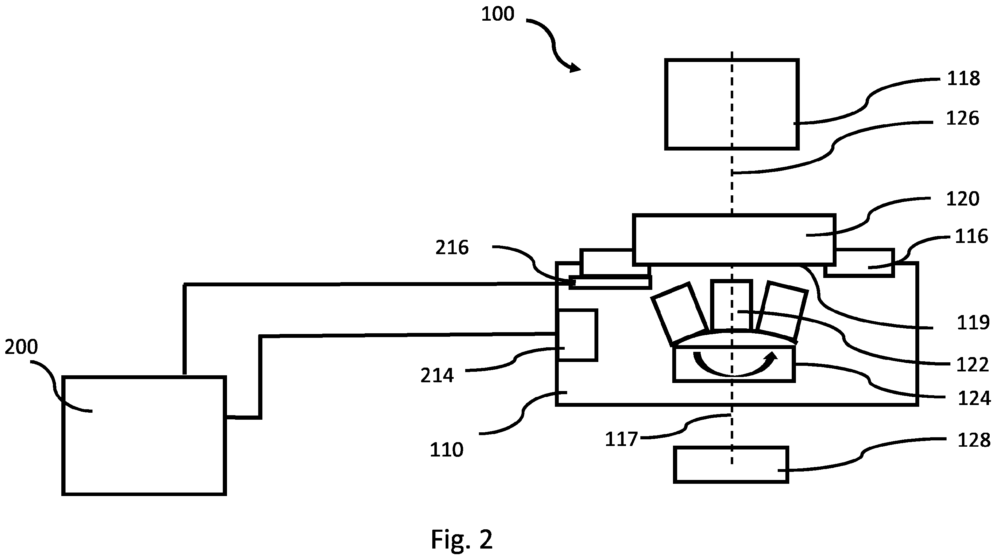

Figur 2 zeigt nun eine ähnliche Anordnung wie Figur 1, mit dem Unterschied, dass es sich bei der Heiz- und/oder Kühleinheit um ein integriertes Heiz- und/oder Kühlelement 214 handelt, das innerhalb des unteren Inkubationsraums 110 angeordnet ist. Bei dem integrierten Heiz- und/oder Kühlelement 214 handelt es sich insbesondere um ein Peltier-Element. Das integrierte Heiz- und/oder Kühlelement 214 ist mit einer Steuerungseinheit 200 verbunden. Weiterhin dargestellt ist in Figur 2 ein Temperatur-Sensor 216, der im unteren Inkubationsraum 110 angeordnet ist und dessen Mess-Signal an die Steuerungseinheit 200 übertragen wird. Anhand des gemessenen Ist-Signals der Temperatur kann die Steuerungseinheit 200 das integrierte Heiz- und/oder Kühlelement 214 ansteuern, um die vorgegebene Ziel-Temperatur im Innern des unteren Inkubationsraums 110 einzustellen. Die hier gezeigte Anordnung ist selbstverständlich auch auf die in Figur 1 dargestellte Anordnung mit externer Heiz- und/oder Kühleinheit 212 übertragbar. Wie aus Figur 2 ersichtlich, ist der Temperaturfühler des Temperatur-Sensors 216 in der Nähe der Unterseite 119 des Probenhalters 120 bzw. in der Nähe der Unterseite des Mikroskoptisches 116 angebracht, um die dort herrschende Temperatur möglichst genau messen zu können.

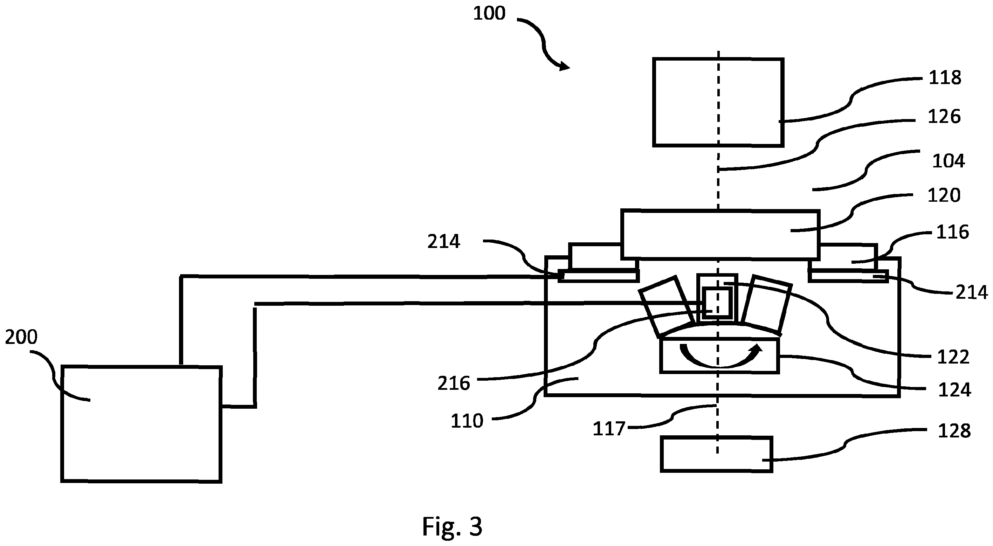

Figur 3 zeigt eine zu Figur 2 leicht geänderte Anordnung eines inversen Mikroskops 100. Wiederum sei nur auf die jeweiligen Änderungen näher eingegangen. Ähnlich wie in Figur 2 handelt es sich bei der Heiz- und/oder Kühleinheit um ein integriertes Heiz- und/oder Kühlelement 214. Allerdings ist der Temperatur-Sensor 216 nunmehr unmittelbar an der Abbildungsoptik 122 angeordnet. Nähere Erläuterungen zu dieser Anordnung finden sich weiter unten in den Ausführungsbeispielen. Auch diese Anordnung ist vorteilhaft, da die Temperatur der Abbildungsoptik 122, insbesondere bei Immersionsobjektiven, der gewünschten Ziel- Temperatur entsprechen muss, um Wärmeeintrag in bzw. Wärmeaustrag aus der untersuchten Probe zu verhindern.

An dieser Stelle sei betont, dass auch mehrere Temperatur-Sensoren 216, etwa eine Kombination der in den Figuren 2 und 3 dargestellten Temperatur-Sensoren möglich sind und zweckmäßig sein können. Die Steuerungseinheit 200 kann die Signale mehrerer Temperatur-Sensoren verarbeiten, beispielsweise Mittelwerte bilden oder die Werte eines Sensors verwenden, wenn die Werte des anderen nicht plausibel sind oder schließlich die Werte des einen Sensors anhand der Werte des anderen Sensors auf Plausibilität prüfen.

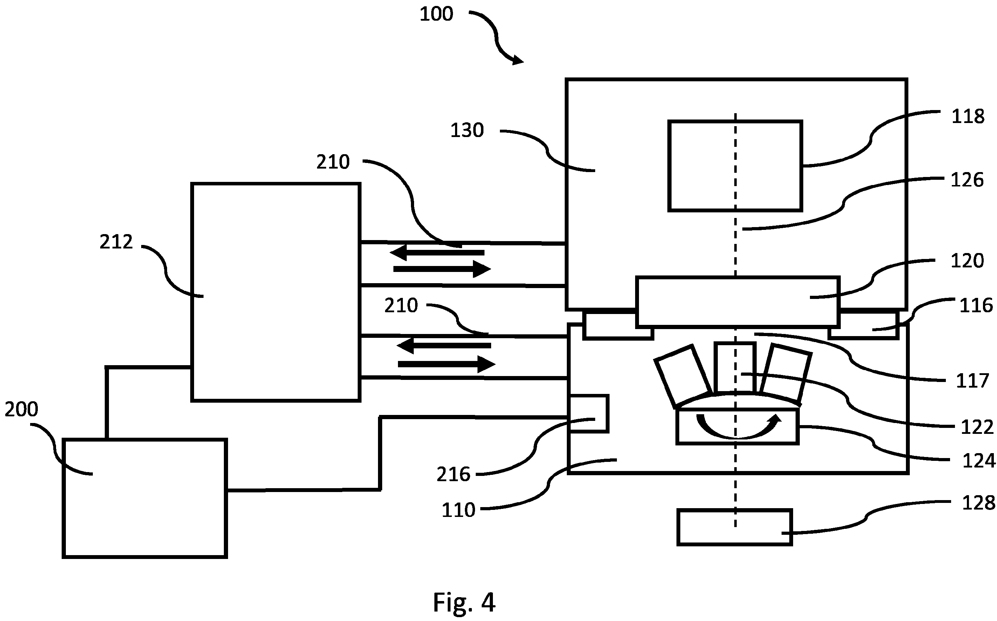

Figur 4 zeigt eine weitere Ausführungsform eines inversen Mikroskops 100, bei der ein oberer Inkubationsraum 130 vorgesehen ist, der die Beleuchtungsoptik 118 umfasst und nach unten begrenzt wird von der Oberseite des Mikroskoptisches 116 und der Oberseite des darin aufgenommenen Probenhalters 120. Der obere Inkubationsraum 130 kann insbesondere durch einen Gehäuseabschnitt des inversen Mikroskops 100 gebildet sein. Auf diese Weise bildet der obere Inkubationsraum 130 einen abgetrennten separaten inkubierbaren Probenraum. Dieser enthält eine Schnittstelle zu einer externen Heiz- und/oder Kühleinheit 212, wobei die Einheit 212 mit dem oberen Inkubationsraum 130 über eine Verbindungsleitung 210 verbunden ist.

Bezüglich des in Figur 4 dargestellten unteren Inkubationsraums 110 gelten die analogen Aussagen wie zu den Ausführungsbeispielen gemäß Figuren 1 und 2. Im unteren Inkubationsraum 110 ist ein Temperatur-Sensor 216 angeordnet, der mit einer (externen) Steuerungseinheit 200 in Kommunikationsverbindung steht.

Diese Steuerungseinheit 200 steuert ihrerseits die externe Heiz- und/oder Kühleinheit 212 an. Diese steht mit einer weiteren Verbindungsleitung 210 mit dem unteren Inkubationsraum 110 in Verbindung. Auf diese Weise kann mit einer externen Heiz- und/oder Kühleinheit 212 sowohl der obere Inkubationsraum 130 als auch der untere Inkubationsraum 110 inkubiert, d.h. durch Zufuhr/Abfuhr geheizter/gekühlter Luft eine vorgegebene Temperatur in dem oberen Inkubationsraum 130 und die vorgegebene Zieltemperatur in dem unteren Inkubationsraum 110 eingestellt werden, wobei beide Temperaturen vorzugsweise gleich sind. Darüber hinaus kann durch entsprechende Ausgestaltung der externen Heiz- und/oder Kühleinheit 212 die in der oberen Verbindungsleitung 210 zugeführte Luft in ihrer Zusammensetzung, etwa durch Zugabe von Sauerstoff, Stickstoff, Kohlendioxid und/oder Wasser, beeinflusst werden, um eine gewünschte Inkubationsatmosphäre in dem oberen Inkubationsraum 130 einzustellen. Eine solche Inkubationsatmosphäre ist für bestimmte Experimente an lebenden Zellen besonders günstig.

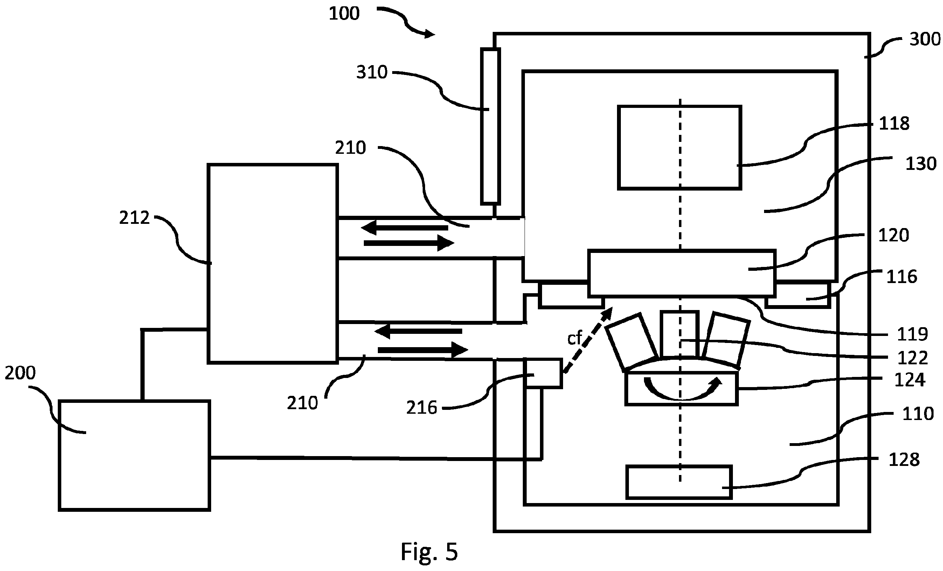

Figur 5 zeigt eine leicht abgewandelte Ausführungsform eines inversen Mikroskops 100 nach Figur 4. Ein gemeinsames Gehäuse 300 umschließt den oberen Inkubationsraum 130 und den unteren Inkubationsraum 110. Eine Tür bzw. Klappe 310 erlaubt den direkten Zugang zu dem oberen Inkubationsraum 130, wie in Figur 5 sehr schematisch dargestellt ist. Es sei angemerkt, dass die dargestellte Tür bzw. Klappe 310 auch unmittelbar an dem oberen Inkubationsraum 130 gemäß Figur 4 angebracht sein kann. Des Weiteren zeigt das Symbol "cf" eine kontaktfreie Messung des Temperatur-Sensors 216 an, der derart angeordnet und ausgerichtet ist, dass er die Temperatur an der Unterseite 119 des Probenhalters 120 kontaktfrei misst. Im Übrigen sei auf das Ausführungsbeispiel gemäß Figur 4 verwiesen.

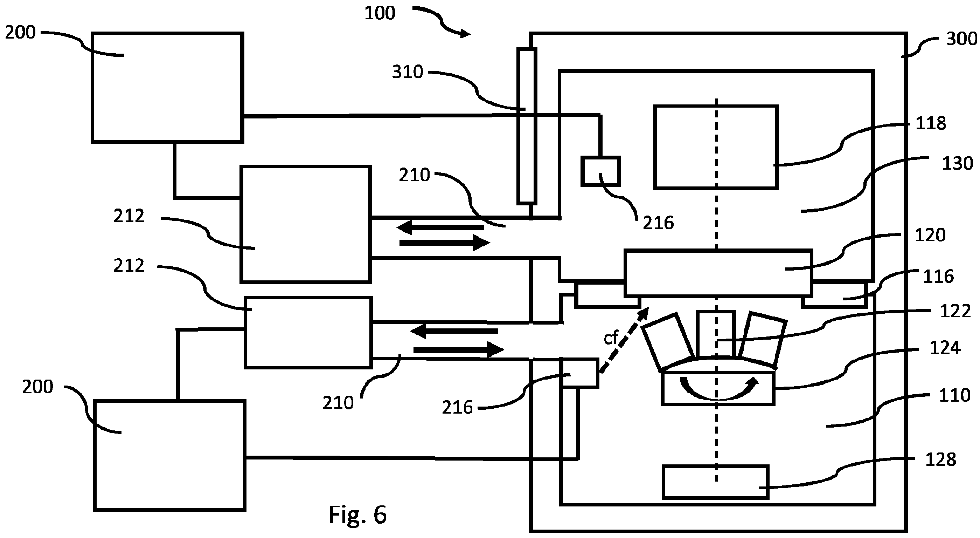

Figur 6 zeigt eine weitere Ausführungsform eines inversen Mikroskops 100 ausgehend von Figur 5, wobei wiederum nur die Unterschiede zu Figur 5 näher erläutert werden sollen. Wie aus Figur 6 ersichtlich, ist dem oberen Inkubationsraum 130 eine eigene externe Heiz- und/oder Kühleinheit 212 zugeordnet und mit diesem über die obere Verbindungsleitung 210 verbunden. Zusätzlich ist dem unteren Inkubationsraum 110 eine externe Heiz- und/oder Kühleinheit 212 zugeordnet, die mit dem unteren Inkubationsraum 110 über die untere Verbindungsleitung 210 verbunden ist. Bezüglich der Inkubation des unteren Inkubationsraums 110 sei insofern auf die obigen Ausführungen verwiesen. Bezüglich der Inkubation des oberen Inkubationsraums 130 ist in diesem Ausführungsbeispiel eine von der Inkubation des unteren Inkubationsraums 110 völlig unabhängige Inkubation möglich. Hierzu ist ein eigener Temperatur-Sensor 216 im oberen Inkubationsraum 130 angeordnet, der mit einer eigenen externen Steuerungseinheit 200 in Kommunikationsverbindung steht, um aktuelle Ist-Temperaturwerte zu übermitteln. Die externe Steuerungseinrichtung 200 steuert die dem oberen Inkubationsraum 130 zugeordnete externe Heiz- und/oder Kühleinheit 212 entsprechend an, damit diese durch Zufuhr/Abfuhr geheizter/gekühlter Luft eine vorgegebene Soll-Temperatur im oberen Inkubationsraum 130 einstellt. Bei dieser in Figur 6 dargestellten Ausführungsform sind zwei voneinander völlig unabhängige Inkubationsarten realisierbar. Das Volumen des oberen Inkubationsraums 130 kann bezüglich Temperatur, Gaszusammensetzung und insbesondere Luftfeuchtigkeit in einem eigenen Kreislauf kontrolliert bzw. geregelt werden, um optimale Bedingungen zur mikroskopischen Untersuchung von lebenden Zellen zu gewährleisten. Im Volumen des unteren Inkubationsraums 110 ist hingegen die Art der Atmosphärenzusammensetzung wenig relevant, ein Erhöhen der Luftfeuchtigkeit wäre sogar kontraproduktiv. Hier reicht es demnach aus, insbesondere trockene Luft einer gewünschten Ziel-Temperatur einzuleiten, um vorteilhafte und gleichmäßige Temperaturen an der Unterseite des Probenhalters 120 sicherzustellen. Dies kann durch einen geringen Luftfluss gewährleistet werden, der die Abbildungsoptik 122 und die Unterseite 119 des Probenhalters 120 umströmt. Hierbei ist es insbesondere sinnvoll, die Temperaturen im oberen sowie im unteren Volumen der jeweiligen Inkubationsräume 130, 110 auf einen gleichen Temperaturwert zu halten, um beide Räume bezüglich der Temperatur in perfektem Gleichgewicht zu halten. Es ist insbesondere vorteilhaft, wenn beide Inkubationssteuerungen über eine gemeinsame Software-Schnittstelle angesteuert werden können.

Während die Figuren 1 bis 6 verschiedene Möglichkeiten des prinzipiellen Aufbaus eines inversen Mikroskops gemäß erfinderischem Konzept behandeln, wobei einzelne Varianten, wie bereits erwähnt, kombiniert werden können, soll im Folgenden auf den Aufbau und die Anordnung von Sensoren, Heiz- und/oder Kühleinheiten und Steuerungseinheiten eingegangen werden. Die folgenden Ausführungsbeispiele sind untereinander sowie mit den Figuren 1 bis 6 kombinierbar, ohne dass jede einzelne Kombination explizit behandelt werden müsste.

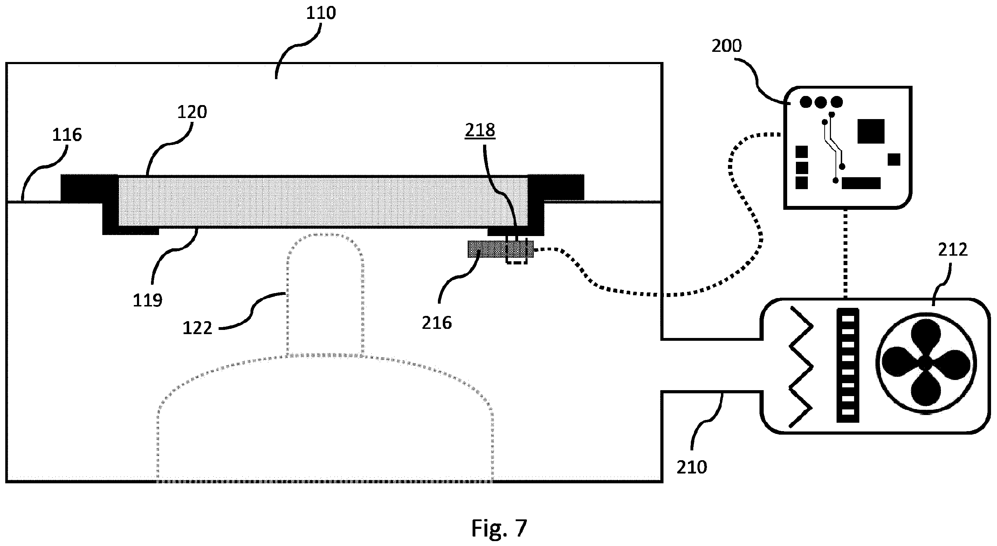

Figur 7 zeigt einen Ausschnitt aus dem unteren Inkubationsraum 110, wie er in Zusammenhang mit den Figuren 1 bis 6 ausführlich erläutert wurde. Lediglich schematisch ist die Abbildungsoptik 122 wiedergegeben. Der Mikroskoptisch ist mit 116 bezeichnet, in seiner Öffnung ist ein Adapter bzw. eine Aufnahme eingelassen, der zur Aufnahme des Probenhalters 120 ausgebildet ist. Der Adapter soll im Folgenden als Teil des Mikroskoptisches 116 aufgefasst werden. Wie aus Figur 7 ersichtlich, ist an der Unterseite des Mikroskoptisches 116, insbesondere an der Unterseite des Adapters, eine Befestigungseinrichtung, beispielsweise in Form einer Kabelschelle 218 oder eines Clips vorgesehen, an der bzw. dem ein Temperatur-Sensor 216 befestigt werden kann. Der Temperatur-Sensor, insbesondere seine Spitze oder der Temperaturfühler des Sensors, ist derart angeordnet, dass die Temperatur im Bereich der Unterseite 119 des Probenhalters 120 gemessen wird.

Wie weiterhin aus Figur 7 ersichtlich, ist der Temperatur-Sensor 216 über ein Sensorkabel mit der Steuerungseinheit 200 verbunden, die ihrerseits die externe Heiz- und/oder Kühleinheit 212 ansteuert. Letztere ist wiederum über eine Verbindungsleitung 210 mit dem unteren Inkubationsraum 110 verbunden. Die Heiz- und/oder Kühleinheit 212 kann eines oder mehrere der symbolisch dargestellten Elemente enthalten: Heizspirale, Peltier-Element, Ventilator. Hierdurch kann geheizte oder gekühlte Luft dem unteren Inkubationsraum 110 zugeführt werden, um eine vorgegebene Ziel-Temperatur einzustellen. Die aktuelle Ist-Temperatur wird von dem Temperatur-Sensor 216 gemessen und das entsprechende Signal der Steuerungseinheit 200 zugeführt, die dann in bekannter Weise die Heiz- und/oder Kühleinheit 212 ansteuert.

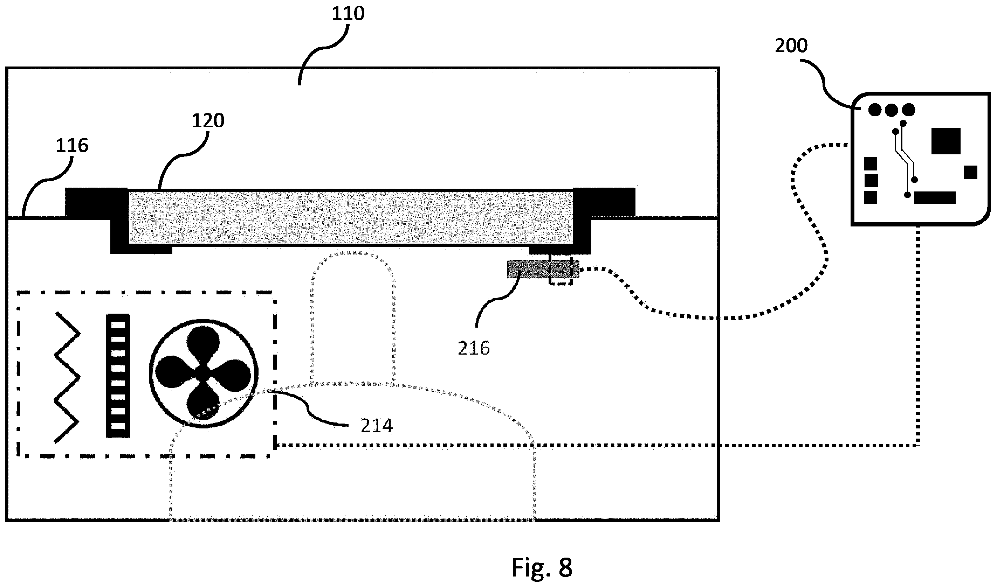

Figur 8 zeigt im Wesentlichen die gleichen Verhältnisse wie Figur 7 mit dem Unterschied, dass die Heiz- und/oder Kühleinheit in Figur 8 als integrierte Hei- und/oder Kühleinheit 214 ausgeführt ist. Letztere befindet sich somit innerhalb des unteren Inkubationsraums 110. Dies ist insbesondere dann zweckmäßig, wenn im Inkubationsraum 110 ausreichend Platz vorhanden ist. Aber auch Energieverluste aufgrund von Leitung des Mediums über eine Verbindungsleitung entfallen hier. Anstelle der Heiz- und /oder Kühleinheit kann auch ein einzelnes Heiz- und/oder Kühlelement 214 verwendet werden. Alle anderen Ausführungen betreffend dieses Ausführungsbeispiels entsprechen denjenigen der Figur 7, so dass zur Vermeidung von Wiederholungen auf diese Ausführungen verwiesen wird.

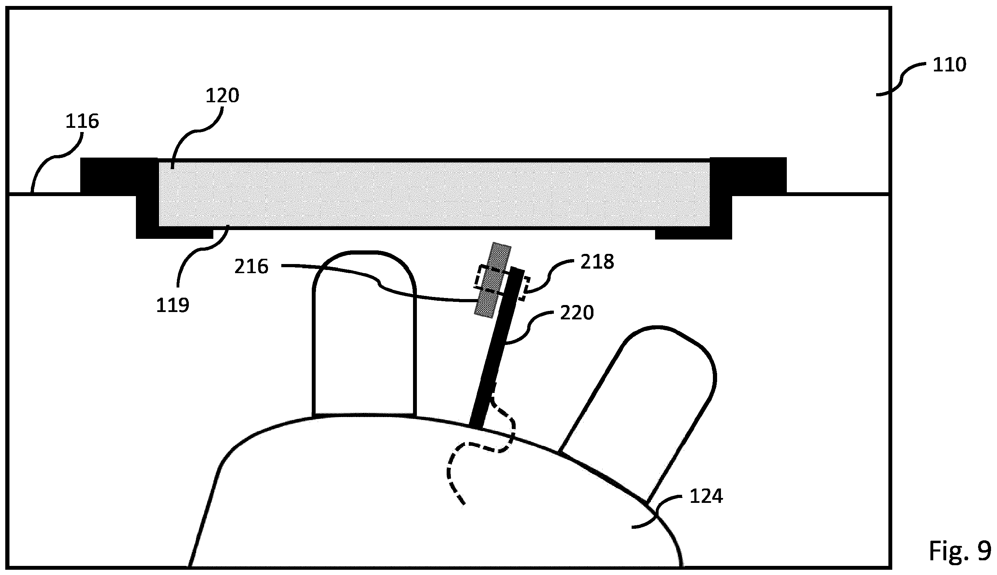

Figur 9 zeigt eine weitere Möglichkeit der Befestigung eines Temperatur-Sensors 216, wobei bezüglich der Ausgestaltungen der zugeordneten Heiz- und/oder Kühleinheit bzw. Steuerungseinheit auf die Figuren 7 und 8 verwiesen wird. Gemäß Figur 9 ist im unteren Inkubationsraum 110 unterhalb des Mikroskoptisches 116 und des darin aufgenommenen Probenhalters 120 eine Objektiv-Wechseleinrichtung 124 vorhanden, die hier schematisch dargestellt ist. Es sei angemerkt, dass nur ein Ausschnitt des unteren Inkubationsraums 110 dargestellt ist. In diesem Ausführungsbeispiel ist der Temperatur-Sensor 216 mittels einer geeigneten Befestigung, beispielsweise wiederum der erwähnten Kabelschelle 218 oder eines Clips, axial an dem Grundkörper der Objektiv-Wechseleinrichtung 124 befestigt. Die Befestigung ist mit 220 bezeichnet und bildet in diesem Fall einen schmalen Steg bzw. Stab. Der Temperatur-Sensor 216 ist wiederum über ein Sensorkabel mit einer Steuerungseinheit 200 verbunden (vergleiche obige Erläuterungen).

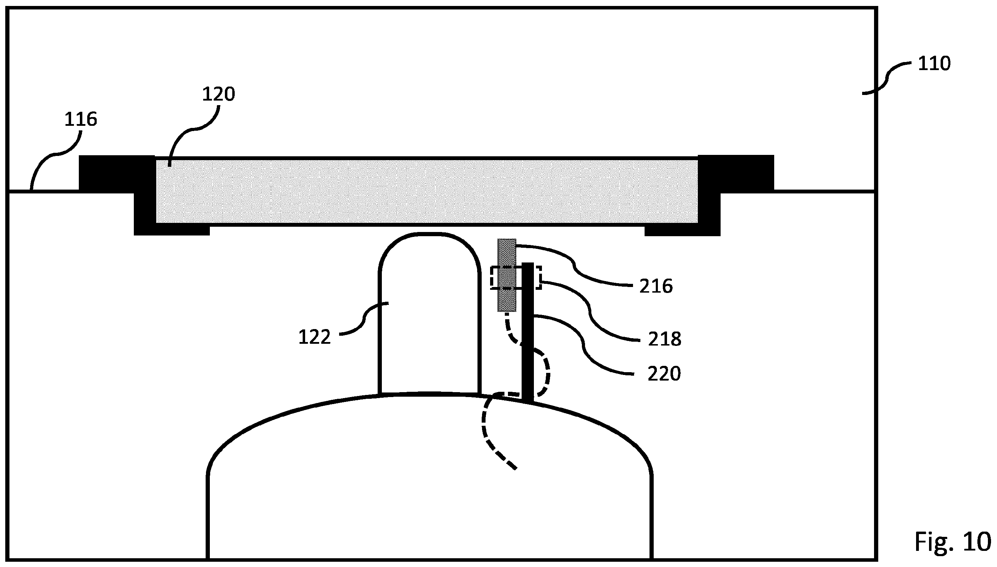

Figur 10 zeigt wiederum eine andere Variante, ähnlich zu der Ausführungsform gemäß Figur 9. Der Temperatur-Sensor 216 ist hier über eine paraxiale Befestigung 220 mit dem Grundkörper eines Einobjektivrevolvers bzw. der Abbildungsoptik 122 verbunden. Die Verbindung von Temperatur-Sensor 216 und Befestigung 220 kann wiederum durch eine Kunststoff-Kabelschelle 218 vorgenommen werden. Wie bereits in den vorhergehenden Figuren ermöglicht der Temperatur-Sensor 216 eine kontaktlose Temperaturmessung in der Nähe von Objektiv/Abbildungsoptik und Probenboden/Unterseite des Probenhalters.

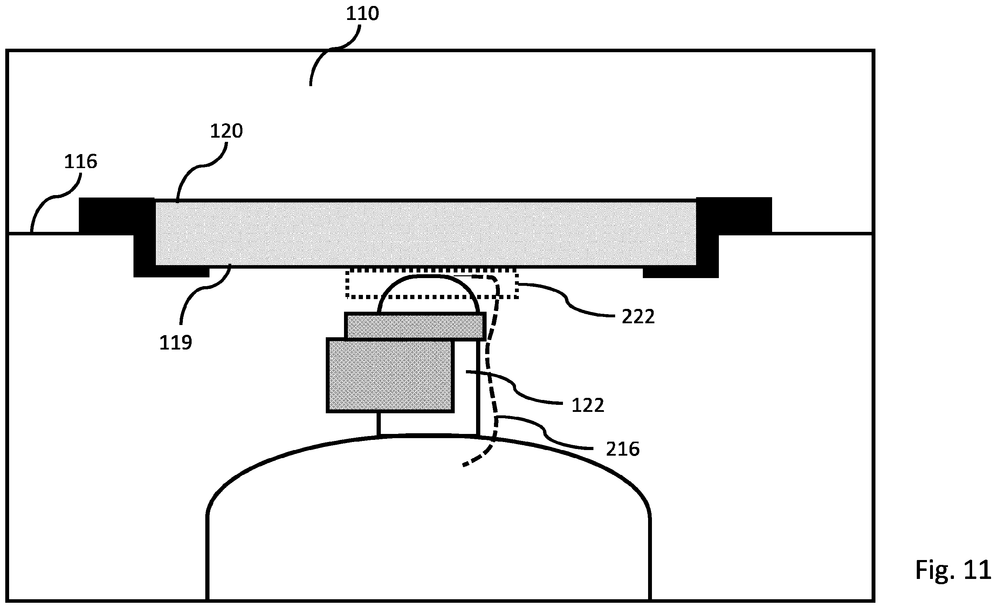

Figur 11 zeigt wiederum eine andere Möglichkeit der Anordnung des Temperatur-Sensors. Bezüglich aller anderen Details sei auf die vorherigen Figuren verwiesen.

Die in Figur 11 dargestellte Anordnung eignet sich insbesondere für Immersionsobjektive, insbesondere sogenannte "MotCorr-Objektive" 122. Diese weisen neben beweglichen Linsengliedern auch einen Immersionsmittelspender 222 auf, der in Form einer Kappe die obere Seite des Objektivs umgibt, um Immersionsmittel an die Objektivspitze zu transportieren. Auf diese Weise kann zwischen Objektiv und Unterseite 119 des Probenhalters 120 eine Immersionslösung eingebracht werden. Wie in Figur 11 dargestellt, kann eine Temperatur-Sensor 216 beispielsweise in Form eines sehr feinen Thermoelements durch die Kappe bzw. den Immersionsmittelspender 222 an die Objektivspitze geführt werden. Somit kann der Sensor 216 direkt die Temperatur an der Unterseite 119 des Probenhalters 120 messen.

Die vorgestellten Ausführungsformen zeigen, dass das erfinderische Konzept eine präzise Temperaturmessung an der Unterseite des Probenhalters im unteren Inkubationsraum erlaubt und somit ermöglicht, durch entsprechende Einstellung einer Ziel-Temperatur positiv auf die Probentemperatur Einfluss zu nehmen.

### Bezugszeichenliste

- 100: Inverses Mikroskop
- 110: unterer Inkubationsraum
- 116: Mikroskoptisch
- 117: Öffnung
- 118: Beleuchtungsoptik
- 119: Unterseite des Probenhalters
- 120: Probenhalter
- 122: Abbildungsoptik
- 124: Objektiv-Wechseleinrichtung
- 126: optische Achse
- 128: Detektionseinrichtung/Kamera
- 130: oberer Inkubationsraum

- 200: Steuerungseinheit
- 210: Verbindungsleitung
- 212: externe Heiz- und/oder Kühleinheit
- 214: integriertes Heiz- und/oder Kühlelement
- 216: Temperatur-Sensor
- 218: Kabelschelle
- 220: Befestigung
- 222: Immersionsmittelspender

- 300: Gehäuse
- 310: Klappe, Tür

- cf: Symbol für kontaktfreie Messung

## Patentansprüche

1. Inverses Mikroskop (100) mit Durchlicht-Beleuchtung, mit
einem Mikroskoptisch (116) mit einer für die Durchlicht-Beleuchtung vorbereiteten Öffnung (117), der ausgebildet ist, einen Probenhalter (120) aufzunehmen,
und einer unterhalb des Mikroskoptisches (116) angeordneten Abbildungsoptik (122),
wobei angrenzend an die Unterseite des Mikroskoptisches (116) ein geschlossener unterer Inkubationsraum (110) des inversen Mikroskops angeordnet ist, der mindestens die Abbildungsoptik (122) umschließt und nach oben hin durch den Mikroskoptisch (116) und den bei Verwendung des inversen Mikroskops darin aufgenommenen Probenhalter (120) begrenzt ist,
wobei das inverse Mikroskop (100) derart eingerichtet ist, dass die Temperatur im unteren Inkubationsraum (110) auf eine vorgebbare Ziel-Temperatur einstellbar ist, wobei hierfür in dem unteren Inkubationsraum ein Temperatur-Sensor (216) des inversen Mikroskops angeordnet ist, dessen Mess-Signal zur Einstellung der vorgegebenen Ziel-Temperatur mittels einer Heiz- und/oder Kühleinheit (212; 214) des inversen Mikroskops (100) dienen kann, welche eingerichtet ist, die Temperatur im unteren Inkubationsraum (110) einzustellen,
**dadurch gekennzeichnet, dass** der untere Inkubationsraum (110) durch einen thermisch isoliert ausgeführten Gehäuseabschnitt des inversen Mikroskops (100) gebildet ist und
dass der Temperatur-Sensor (216) derart ausgebildet und angeordnet ist, dass mittels dessen die Temperatur an der Unterseite (119) des im Mikroskoptisch (116) aufgenommenen Probenhalters (120) messbar ist, wobei die Unterseite des Mikroskoptisches (116) nahe der Öffnung (117) eine Befestigung aufweist, an der ein Temperaturfühler des Temperatur-Sensors (216) befestigt ist, oder der Temperatur-Sensor (216) an einer anderen Stelle innerhalb des unteren Inkubationsraums (110) so angeordnet ist, dass der Temperaturfühler des Temperatur-Sensors (216) in Richtung der Unterseite des Mikroskoptisches (116) ausgerichtet ist, um zielgerichtet und berührungslos die Temperatur in einem Bereich der Unterseite des Probenhalters (120) zu messen.

2. Inverses Mikroskop nach Anspruch 1, wobei die Heiz- und/oder Kühleinheit mindestens eine externe, also außerhalb des unteren Inkubationsraums angeordnete, Heiz- und/oder Kühleinheit (212) ist, mit der der untere Inkubationsraum (110) über mindestens eine Verbindungsleitung (210) des inversen Mikroskops verbunden ist, wobei durch Zufuhr und/oder Abfuhr geheizter und/oder gekühlter Luft die vorgegebene Ziel-Temperatur in dem unteren Inkubationsraum einstellbar ist.

3. Inverses Mikroskop nach Anspruch 1, wobei die Heiz- und/oder Kühleinheit mindestens eine integrierte Heiz- und/oder Kühleinheit (214) ist, welche in dem unteren Inkubationsraum (110) angeordnet ist und welche eingerichtet ist, durch Heizen oder Kühlen die vorgegebene Ziel-Temperatur in dem unteren Inkubationsraum einzustellen.

4. Inverses Mikroskop nach einem der vorstehenden Ansprüche, wobei es eine Steuerungseinheit (200) umfasst, welche mit dem Temperatur-Sensor (216) in Kommunikationsverbindung steht, um das von dem Temperatur-Sensor (216) erzeugte Mess-Signal an die Steuerungseinheit (200) zu übertragen, und welche eingerichtet ist, die Heiz- und/oder Kühleinheit (212; 214) anzusteuern, um die vorgegebene Ziel-Temperatur in dem unteren Inkubationsraum einzustellen.

5. Inverses Mikroskop nach einem der vorhergehenden Ansprüche, mit einem separaten oberen Inkubationsraum (130), der oberhalb des Mikroskoptisches (116) vorgesehen ist.

6. Inverses Mikroskop nach Anspruch 5, wobei der untere Inkubationsraum (110) und der obere Inkubationsraum (130) unabhängig voneinander inkubierbar sind.

7. Inverses Mikroskop nach Anspruch 5 oder 6, soweit auf Anspruch 2 bezogen, wobei der untere Inkubationsraum (110) und der obere Inkubationsraum (130) jeweils über separate Verbindungsleitungen (210) des inversen Mikroskops mit der, beide versorgenden, externen Heiz- und/oder Kühleinheit (212) des inversen Mikroskops oder separat mit jeweils mindestens einer ihnen getrennt zugeordneten externen Heiz- und/oder Kühleinheit (212) des inversen Mikroskops verbunden sind, wobei durch Zufuhr und/oder Abfuhr geheizter und/oder gekühlter Luft eine vorgegebene Temperatur in dem oberen Inkubationsraum (130) und die vorgegebene Ziel-Temperatur in dem unteren Inkubationsraum (110) einstellbar ist.

8. Inverses Mikroskop nach einem der Ansprüche 5 bis 7, wobei der obere Inkubationsraums (130) und der untere Inkubationsraum (110) von einem gemeinsamen Gehäuse (300) des inversen Mikroskops umschlossen sind oder an einem gemeinsamen Gehäuse (300) des inversen Mikroskops grenzen.

9. Inverses Mikroskop nach Anspruch 8, wobei das Gehäuse (300) den oberen Inkubationsraum (130) und den unteren Inkubationsraum (110) umschließt.

10. Inverses Mikroskop nach Anspruch 9, wobei das Gehäuse (300) eine Tür oder Klappe (310) aufweist, die einen direkten Zugang zu dem oberen Inkubationsraum (130) erlaubt.

## Claims

1. Inverted microscope (100) with transmitted-light illumination, with a microscope stage (116) with an opening (117) prepared for the transmitted-light illumination, which is designed to receive a sample holder (120), and an imaging optical unit (122) disposed below the microscope stage (116),
wherein adjacent to the underside of the microscope stage (116) a closed lower incubation space (110) of the inverted microscope is arranged, which surrounds at least the imaging optical unit (122) and is delimited at the top by the microscope stage (116) and the sample holder (120) received therein during use of the inverted microscope,
wherein the inverted microscope (100) is configured such that the temperature in the lower incubation space (110) is adjustable to a predefinable target temperature, wherein for this purpose a temperature sensor (216) of the inverted microscope is disposed in the lower incubation space, the measurement signal of which can serve for setting the predefined target temperature by means of a heating and/or cooling unit (212; 214) of the inverted microscope (100), which is configured to set the temperature in the lower incubation space (110),
**characterized in that** the lower incubation space (110) is formed by a thermally insulated housing section of the inverted microscope (100) and that the temperature sensor (216) is designed and disposed such that by means thereof the temperature at the underside (119) of the sample holder (120) received in the microscope stage (116) is measurable,
wherein the underside of the microscope stage (116) has, near the opening (117), a fastening to which a temperature probe of the temperature sensor (216) is fastened, or the temperature sensor (216) is disposed at another location within the lower incubation space (110), such that the temperature probe of the temperature sensor (216) is oriented in the direction of the underside of the microscope stage (116) in order to measure, in a targeted manner and in a noncontact manner, the temperature in a range of the underside of the sample holder (120).

2. Inverted microscope according to claim 1, wherein the heating and/or cooling unit is at least one external heating and/or cooling unit (212), that is to say disposed outside the lower incubation space, with which the lower incubation space (110) is connected via at least one connecting line (210) of the inverted microscope, wherein by supply and/or removal of heated and/or cooled air the predefined target temperature in the lower incubation space is adjustable.

3. Inverted microscope according to claim 1, wherein the heating and/or cooling unit is at least one integrated heating and/or cooling unit (214), which is disposed in the lower incubation space (110) and which is configured to set, by heating or cooling, the predefined target temperature in the lower incubation space.

4. Inverted microscope according to any one of the preceding claims, wherein it comprises a control unit (200), which is in communication connection with the temperature sensor (216) in order to transmit the measurement signal generated by the temperature sensor (216) to the control unit (200), and which is configured to actuate the heating and/or cooling unit (212; 214) in order to set the predefined target temperature in the lower incubation space.

5. Inverted microscope according to any one of the preceding claims, with a separate upper incubation space (130), which is provided above the microscope stage (116).

6. Inverted microscope according to claim 5, wherein the lower incubation space (110) and the upper incubation space (130) are incubatable independently of one another.

7. Inverted microscope according to claim 5 or 6, insofar as it refers back to claim 2, wherein the lower incubation space (110) and the upper incubation space (130) are each connected via separate connecting lines (210) of the inverted microscope to the external heating and/or cooling unit (212) of the inverted microscope supplying both, or separately to in each case at least one external heating and/or cooling unit (212) of the inverted microscope assigned separately thereto, wherein by supply and/or removal of heated and/or cooled air a predefined temperature in the upper incubation space (130) and the predefined target temperature in the lower incubation space (110) are adjustable.

8. Inverted microscope according to any one of claims 5 to 7, wherein the upper incubation space (130) and the lower incubation space (110) are surrounded by a common housing (300) of the inverted microscope or border on a common housing (300) of the inverted microscope.

9. Inverted microscope according to claim 8, wherein the housing (300) surrounds the upper incubation space (130) and the lower incubation space (110).

10. Inverted microscope according to claim 9, wherein the housing (300) has a door or flap (310) which permits direct access to the upper incubation space (130).

## Revendications

1. Microscope inversé (100) avec éclairage en transmission, avec une platine de microscope (116) avec une ouverture (117) préparée pour l'éclairage en transmission, qui est conçue pour recevoir un porte-échantillon (120), et une optique d'imagerie (122) disposée au-dessous de la platine de microscope (116), dans lequel, jouxtant la face inférieure de la platine de microscope (116), un espace d'incubation inférieur (110) fermé du microscope inversé est disposé, lequel entoure au moins l'optique d'imagerie (122) et est limité vers le haut par la platine de microscope (116) et le porte-échantillon (120) reçu dans celle-ci lors de l'utilisation du microscope inversé, dans lequel le microscope inversé (100) est configuré de telle sorte que la température dans l'espace d'incubation inférieur (110) est réglable à une température cible pouvant être prédéfinie, dans lequel, à cette fin, dans l'espace d'incubation inférieur, un capteur de température (216) du microscope inversé est disposé, dont le signal de mesure peut servir au réglage de la température cible prédéfinie au moyen d'une unité de chauffage et/ou de refroidissement (212 ; 214) du microscope inversé (100), laquelle est configurée pour régler la température dans l'espace d'incubation inférieur (110), **caractérisé en ce que** l'espace d'incubation inférieur (110) est formé par une section de boîtier du microscope inversé (100) réalisée de manière thermiquement isolée et **en ce que** le capteur de température (216) est conçu et disposé de telle sorte qu'au moyen de celui-ci la température au niveau de la face inférieure (119) du porte-échantillon (120) reçu dans la platine de microscope (116) peut être mesurée, dans lequel la face inférieure de la platine de microscope (116), à proximité de l'ouverture (117), présente une fixation à laquelle une sonde de température du capteur de température (216) est fixée, ou le capteur de température (216) est disposé à un autre endroit à l'intérieur de l'espace d'incubation inférieur (110) de telle sorte, que la sonde de température du capteur de température (216) est orientée en direction de la face inférieure de la platine de microscope (116), afin de mesurer de manière ciblée et sans contact la température dans une zone de la face inférieure du porte-échantillon (120).

2. Microscope inversé selon la revendication 1, dans lequel l'unité de chauffage et/ou de refroidissement est au moins une unité de chauffage et/ou de refroidissement (212) externe, donc disposée à l'extérieur de l'espace d'incubation inférieur, à laquelle l'espace d'incubation inférieur (110) est relié via au moins une conduite de liaison (210) du microscope inversé, dans lequel, par apport et/ou évacuation d'air chauffé et/ou refroidi, la température cible prédéfinie dans l'espace d'incubation inférieur est réglable.

3. Microscope inversé selon la revendication 1, dans lequel l'unité de chauffage et/ou de refroidissement est au moins une unité de chauffage et/ou de refroidissement (214) intégrée, laquelle est disposée dans l'espace d'incubation inférieur (110) et laquelle est configurée pour régler, par chauffage ou refroidissement, la température cible prédéfinie dans l'espace d'incubation inférieur.

4. Microscope inversé selon l'une quelconque des revendications précédentes, dans lequel il comprend une unité de commande (200), laquelle est en liaison de communication avec le capteur de température (216), afin de transmettre à l'unité de commande (200) le signal de mesure généré par le capteur de température (216), et laquelle est configurée pour commander l'unité de chauffage et/ou de refroidissement (212 ; 214), afin de régler la température cible prédéfinie dans l'espace d'incubation inférieur.

5. Microscope inversé selon l'une quelconque des revendications précédentes, avec un espace d'incubation supérieur (130) séparé, qui est prévu au-dessus de la platine de microscope (116).

6. Microscope inversé selon la revendication 5, dans lequel l'espace d'incubation inférieur (110) et l'espace d'incubation supérieur (130) peuvent être incubés indépendamment l'un de l'autre.

7. Microscope inversé selon la revendication 5 ou 6, dans la mesure où il se rapporte à la revendication 2, dans lequel l'espace d'incubation inférieur (110) et l'espace d'incubation supérieur (130) sont reliés respectivement, via des conduites de liaison (210) séparées du microscope inversé, à l'unité de chauffage et/ou de refroidissement (212) externe du microscope inversé, alimentant les deux, ou séparément chacun à au moins une unité de chauffage et/ou de refroidissement (212) externe du microscope inversé qui leur est attribuée séparément, dans lequel, par apport et/ou évacuation d'air chauffé et/ou refroidi, une température prédéfinie dans l'espace d'incubation supérieur (130) et la température cible prédéfinie dans l'espace d'incubation inférieur (110) sont réglables.

8. Microscope inversé selon l'une des revendications 5 à 7, dans lequel l'espace d'incubation supérieur (130) et l'espace d'incubation inférieur (110) sont entourés par un boîtier (300) commun du microscope inversé ou jouxtent un boîtier (300) commun du microscope inversé.

9. Microscope inversé selon la revendication 8, dans lequel le boîtier (300) entoure l'espace d'incubation supérieur (130) et l'espace d'incubation inférieur (110).

10. Microscope inversé selon la revendication 9, dans lequel le boîtier (300) présente une porte ou un clapet (310) qui permet un accès direct à l'espace d'incubation supérieur (130).
